# EUROPEAN PATENT APPLICATION

(11) **EP 1 442 933 A1**
(43) Date of publication of application: **04.08.2004**
(21) Application number: 03001536.6
(22) Date of filing: 23.01.2003
(51) Int. Cl.: B60R 1/08, B60R 1/02

(54) **Control module for adjusting view angle of rearview mirror via vehicular digital bus**

(71) Applicant: Exon Science Inc., Guei Shan Shiang, Taoyuan,Taiwan 333 (TW)
(72) Inventor: Su, Wen-Wei, c/o Exon Science Inc., Taoyuan, Taiwan 333, R.O.C. (JP); Chen, Kuei-Hung, c/o Exon Science Inc., Taoyuan, Taiwan 333, R.O.C. (JP); Hsiao, Shun-Hsiang, c/o Exon Science Inc., Taoyuan, Taiwan 333, R.O.C. (JP)
(74) Representative: Winkler, Andreas, Dr.

(57) **Abstract**

A control module (M1,M0,M3) for adjusting the view angle of a rearview mirror via a controller area network (CAN) bus (10) is disclosed. The control module is connected to a CAN bus and a rearview mirror (113,114) of a vehicle. Upon reading and decoding a digital encoded signal which is transmitted on the vehicular digital bus (10) and corresponds to a turning operation of the vehicle, the control module adjusts a view angle of the monitor device according to the decoded information.

## Description

The present invention relates to a control module of a rearview mirror of a vehicle, and more particular to a control module for automatically adjusting a view angle of a rearview mirror of a turning vehicle via a vehicular digital bus. Especially, the vehicular digital bus is a controller area network bus (CAN Bus) or a vehicle area network bus (VAN bus).

For modem vehicles, to move has not been the only purpose any longer. People need faster, safer and more comfortable cars other than just vehicles. Therefore, various kinds of electronic apparatus are applied to the modem cars to conveniently lock/unlock the doors, operate the rearview mirrors, move the seats, switch on/off the headlamps, and etc. In addition, equipments such as defog heaters, air bags, stereo sound and speakers are becoming essential for general cars. Due to the presence of various electronic apparatus, the wiring in a vehicle is much more complicated than ever. Especially when all the electric assemblies located in different positions of a car have to be wired to a central computer, the required cables would be long, bulky and heavy. This will adversely effect the performance and the power consumption of the car.

Therefore, in 1990, various bus systems are developed to communicate the electric assemblies so as to solve the wiring problems. A controller area network bus (CAN bus) or a vehicle area network bus (VAN bus) system is one of the most popular communication standards. By the arrangement of local computers and communicating the local computers via the CAN or VAN bus, the wiring can be localized and simplified. Accordingly, the required cables become short, light and neat.

So far, the CAN bus system, although having been applied to the car to solve the wiring problem, is confined to the communication of basic electric assemblies. For some advanced functions, e.g. blind spot prevention by adjusting view angles of rearview mirrors upon turning, it still has to be additionally wired.

Therefore, an object of the present invention is to provide a control module, which can adjust the view angle of the rearview mirror by making use of the CAN or VAN bus.

A first aspect of the present invention relates to a control module for adjusting the view angle of the rearview mirror. The control module is in communication with a vehicular digital bus and a monitor device of a vehicle, reads and decodes a digital encoded signal transmitted on the vehicular digital bus and corresponding to a turning operation of the vehicle, and adjusts a view angle of the monitor device according to the decoded information.

Preferably, the vehicular digital bus is a controller area network (CAN) bus.

In an embodiment, the digital encoded signal is asserted by another control module connected to the vehicular digital bus and an indicator light switch when the indicator-light switch is enabled.

In another embodiment, the digital encoded signal is asserted by another control module connected to the vehicular digital bus and an indicator light when the indicator light is enabled to twinkle.

For example, the monitor device can be a rearview mirror or a camera.

A second aspect of the present invention relates to a monitor device control module for use with a vehicular control system. The vehicular control system comprises a plurality of control modules which control various electric assemblies, respectively, and are in communication with each other via a vehicular digital bus. The monitor device control module is in communication with the vehicular digital bus, reads and decodes a first digital encoded signal which is asserted by one of the control modules of the vehicular control system, transmitted on the vehicular digital bus and corresponds to a turning operation of the vehicle, and asserts a second digital encoded signal to adjust a view angle of a monitor device.

In an embodiment, the monitor device is connected to a selected one of the control modules of the vehicular control system, and the selected control module reads and decodes the second digital encoded signal transmitted on the vehicular digital bus, and has the monitor device moved according to the decoded information.

A third aspect of the present invention relates to a vehicular control system, which comprises a vehicular digital bus; a first control module in communication with the vehicular digital bus and an indicator light, and enabling the indicator light in response to a first vehicular digital signal asserted in response to an enabling operation of an indicator-light switch; and a second control module in communication with the vehicular digital bus, reading and decoding the first digital encoded signal, and adjusting a view angle of a monitor device according to the decoded information.

In an embodiment, the second control module is connected to the monitor to adjust the view angle of the monitor device in response to the first digital encoded signal.

In another embodiment, the second control module asserts a second digital encoded signal after reading and decoding the first digital encoded signal, and the first control module adjusts the view angle of the monitor device in response to the second digital encoded signal.

Preferably, the indicator-light switch is connected to the first control module, and the first digital encoded signal is asserted by the first control module.

Alternatively, the vehicular control system further comprises a third control module connected thereto the indicator-light switch, and asserting the first digital encoded signal when the indicator-light switch is enabled.

The present invention may best be understood through the following description with reference to the accompanying drawings, in which:
Fig. 1 is a schematic diagram showing a CAN bus system incorporating a preferred embodiment of a control module according to the present invention; and
Fig. 2 is a schematic diagram showing a CAN bus system incorporating another preferred embodiment of a control module according to the present invention.

The present invention will now be described more specifically with reference to the following embodiments. It is to be noted that the following descriptions of preferred embodiments of this invention are presented herein for purpose of illustration and description only; it is not intended to be exhaustive or to be limited to the precise form disclosed.

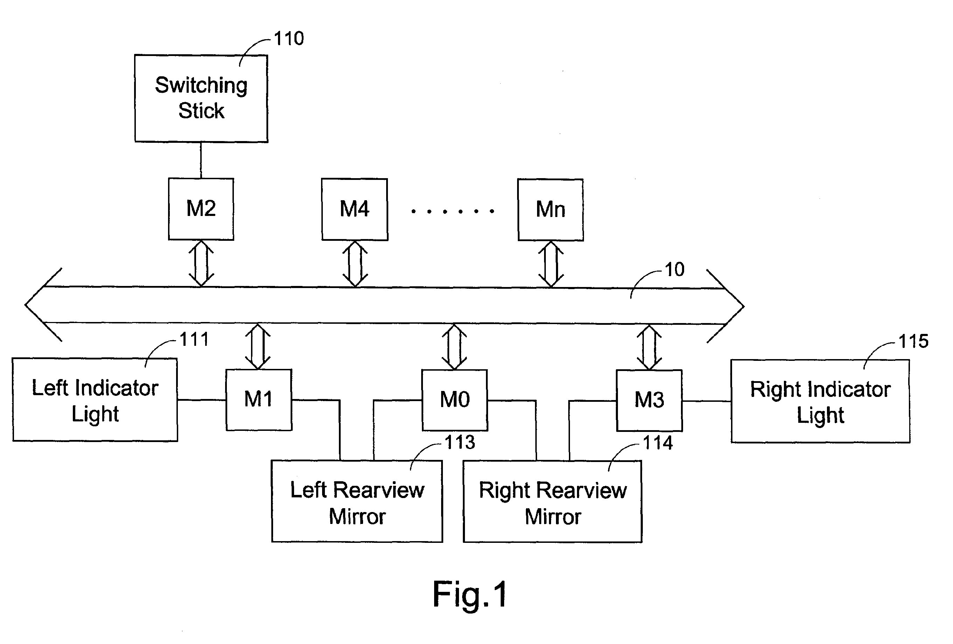

Referring to Fig. 1, a CAN bus system is illustrated. The CAN bus system includes a CAN bus 10 and a plurality of local control modules M1, M2, ... Mn connected to the CAN bus 10 in parallel for controlling various electric assemblies 110, 111, 113, 114 via the bus 10, respectively. For example, the local control module M1 is disposed around the front left door, and controls the moving assembly of the front left seat, the defog heater of the left exterior rearview mirror, the left indicator light, the left-side airbag and the left speakers, and centrally controls all the door locks, all the windows, the moving assemblies of the exterior rearview mirrors, etc., if the left side is the driver's side. The local control module M2 is disposed around the driver's seat, and controls the indicator-light switch, the headlamps, the driver's airbag, the horn, etc. The local control module M3 is disposed at the front right side, and controls the moving assembly of the front right seat, the defog heater of the right exterior rearview mirror, the right indicator light, the passenger's airbag and the right speakers.

The number of local control modules is not particularly stipulated, but aims to simplify the wiring. Those local control modules are electrically connected to the CAN bus 10, and transmit signals on the CAN bus to control respective electric assemblies. For example, when the driver is going to turn the car left, he will move the indicator-light switching stick 110 downwards. Meanwhile, the control module M2 asserts a digital encoded signal corresponding to the downward movement of the switching stick 110 to the bus 10. The digital encoded signal is transmitted on the bus 10 and selectively received by an associated control module, i.e. the control module M1 connected thereto the left indicator light 111 in this example. Upon receiving the digital encoded signal corresponding to the downward movement of the switching stick 110, the control module M1 decodes the digital encoded signal to operate the left indicator light 111, i.e. twinkle the indicator light 111.

According to the present invention, an additional control module M0 is provided to automatically adjust the view angle of the rearview mirrors. The control module M0 is connected to the bus 10 in parallel with the control modules M1∼Mn, and connected to the left rearview mirror 113 and the right rearview mirror 114. The control module is designed to recognize the digital encoded signals associated with the operation of the left and right indicator lights. For example, when the control module M2 asserts a digital encoded signal corresponding to the downward movement of the switching stick 110 to the bus 10, as in the above example, the control module M0 also reads and decodes the digital encoded signal on the bus 10 and realizes that the left indicator light 111 is enabled. Meanwhile, the control module M0 enables the left exterior rearview mirror 113 to turn outwards from an initial position to a predetermined position, thereby enlarging the view angle of the turning side. Subsequently, when the switching stick 110 recovers to the initial position manually or automatically, the control module M2 stops asserting the digital encoded signal or asserts another digital encoded signal corresponding to the recover of the switching stick 110, the control module M1 stops the twinkling operation of the indicator light 111, and the control module M0 enables the rearview mirror 113 to recover to its initial position.

Likewise, when the control module M2 asserts a digital encoded signal corresponding to the upward movement of the switching stick 110 to the bus 10, both of the control modules M3 and M0 read and decode the digital encoded signal on the bus 10. The control module M3 enables the right indicator light 115 to twinkle, and the control module M0 enables the right exterior rearview mirror 114 to turn outwards from an initial position to a predetermined position, thereby enlarging the view angle of the turning side. On the other hand, when the switching stick 110 recovers to the initial position manually or automatically, the control module M2 stops asserting the digital encoded signal or asserts another digital encoded signal corresponding to the recover of the switching stick 110, the control module M1 stops the twinkling operation of the indicator light 115, and the control module M0 enables the rearview mirror 114 to recover to its initial position.

Alternatively, the two rearview mirrors may be turned together. For example, when the car is turning left, both of the rearview mirrors are turned counterclockwise to enlarge the view angle of the left side. On the contrary, when the car is turning right, both of the rearview mirrors are turned clockwise to enlarge the view angle of the right side. Moreover, in addition to moving from an initial position to a predetermined position, the rearview mirror can also perform an sweeping operation during turning. This can be achieved by revising the programs of the control module M0.

In another embodiment, two control modules similar to the control module M0 can be used to control the left and the right rearview mirrors, respectively. One of the control modules is connected to the bus 10 and the left rearview mirror 113, and the other is connected to the bus 10 and the right rearview mirror 114 so as to reduce the length of the cables.

In another aspect, the control module M0 can also move the rearview mirror 113 or 114 according to the digital encoded signal asserted by the control module M1 instead of M2. In other words, when the control module M1 reads the digital encoded signal corresponding to the downward movement of the switching stick 110, the control module M1 decodes the digital encoded signal and asserts another digital encoded signal to operate the left indicator light 111. The control module M0 reads and decodes the digital encoded signal asserted by the control module M1, and enables the rearview mirror 113 or 114 to move according to the decoded information.

The above embodiment is illustrated by connecting the control module M0 to the CAN bus system. It is understood, however, the present control module can also be used with other vehicular digital bus systems to achieve the same purpose. Further, aside from rearview mirrors, the angles of other monitoring devices such as CCD or CMOS cameras or back-up radars can also be properly adjusted by the same or different control modules similar to the above-mentioned ones. Moreover, in addition to the embodiment that the control modules are "connected" to the CAN bus, the control modules can also transceive signal through the bus via a wireless transmission mode.

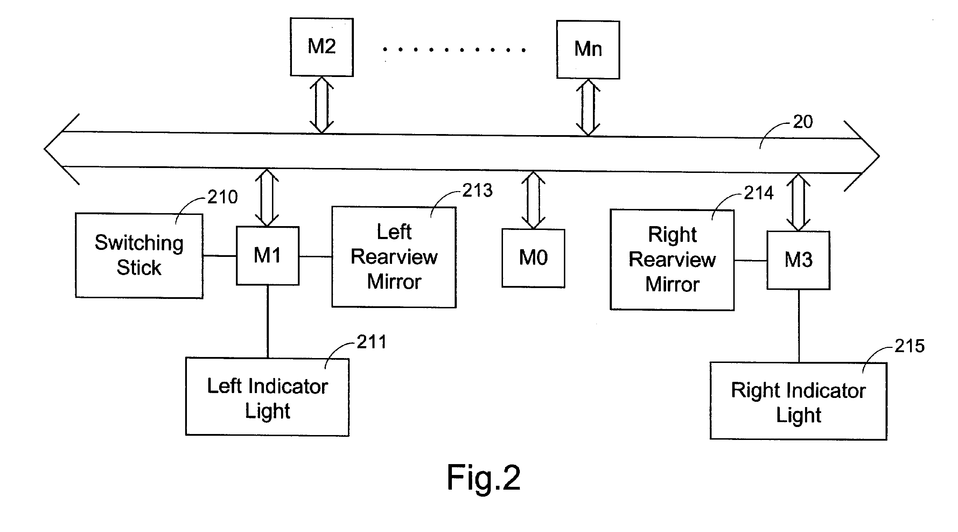

Please refer to Fig. 2 which is a schematic diagram showing a CAN bus system incorporating another preferred embodiment of a control module according to the present invention. In this embodiment, the indicator-light switching stick 210, as well as the left indicator light 211 and the left rearview mirror 213, is connected to the control module M1. The right indicator light 215 and the right rearview mirror 214 are connected to the control module M3. Further, all the local control modules M1∼Mn are connected to the CAN bus 20. The control module M0 additionally provided according to the present invention is connected to the CAN bus 20 alone, and not connected to the left and/or right rearview mirrors.

When the driver is going to turn the car left, he will move the indicator-light switching stick 210 downwards. Meanwhile, the control module M1 asserts a first digital encoded signal corresponding to the downward movement of the switching stick 210 to the bus 20 for the reference of other control modules. In general, the control modules M2∼Mn will not respond to the first digital encoded signal because the left indicator light 211 to respond to the first digital encoded signal is connected to the control module M1 rather than the control modules M2∼Mn. Upon receiving the first digital encoded signal corresponding to the downward movement of the switching stick 210, the control module M1 decodes the first digital encoded signal to operate the left indicator light 211, i.e. twinkle the indicator light 211.

The control module M0 according to the present invention, however, will recognize the first digital encoded signal, decode the first digital encoded signal, and assert a simulated second digital encoded signal recognized by the control module M1 to the bus 20. When the control module M1 detects the second digital encoded signal on the bus 20, the second digital encoded signal is read and decoded by the control module M1 to adjust the view angle of the rearview mirror 213. Subsequently, when the switching stick 210 recovers to the initial position manually or automatically, the control module M1 stops asserting the first digital encoded signal or asserts a third digital encoded signal corresponding to the recover of the switching stick 210. If the third digital encoded signal corresponding to the recover of the switching stick 210 is asserted by the control module M1, the control modules M2∼Mn will still not respond to the third digital encoded signal, but the control module M0 will. The control module M0 will assert a simulated fourth digital encoded signal recognized by the control module M1 to the bus 20 in order to recover the left rearview mirror 213 to its initial position.

The indicator-light switching stick 210 as mentioned above is connected to the control module M1. Alternatively, it can also be connected to the control module M3.

In the above embodiments, the purpose for automatically adjusting the view angle of the rearview mirror upon turning can be achieved by additionally mounting the present control module M0 to the existing CAN bus system. Of course, the same purpose can also be achieved by modifying the existing CAN bus system to incorporate at least the following functions therein.
(i) When detecting that a digital encoded signal to enable the left indicator light is transmitted on the bus, the left rearview mirror turns counterclockwise from an initial position to a predetermined position;
(ii) When detecting that a digital encoded signal to enable the right indicator light is transmitted on the bus, the right rearview mirror turns clockwise from an initial position to a predetermined position;
(iii) When detecting that a digital encoded signal to disable the left indicator light is transmitted on the bus, the left rearview mirror turns clockwise from the predetermined position to its initial position; and
(iv) When detecting that a digital encoded signal to disable the right indicator light is transmitted on the bus, the right rearview mirror turns counterclockwise from the predetermined position to its initial position;

From the above description, the rearview mirror can be automatically adjusted in response to the turning operation via the advanced vehicular digital bus system, e.g. the CAN bus system. By additionally mounting a rearview mirror control module like the above-mentioned control module M0, a common car can have the advanced rearview mirror control function as a deluxe car.

The above embodiments, in spite of being illustrated by using a CAN bus system, it is understood the present invention can be implemented by way of any other suitable vehicular digital bus, e.g. a vehicular area network bus (VAN bus).

The features disclosed in the foregoing description, in the claims and/or in the accompanying drawings may, both separately and in any combination thereof, be material for realising the invention in diverse forms thereof.

## Claims

1. A control module being in communication with a vehicular digital bus and a monitor device of a vehicle, **characterized in that** the control module reads and decodes a digital encoded signal transmitted on the vehicular digital bus and corresponding to a turning operation of the vehicle, and adjusts a view angle of the monitor device according to the decoded information.

2. The control module according to claim 1, **characterized in that** the vehicular digital bus is a controller area network (CAN) bus or a vehicle area network (VAN) bus.

3. The control module according to claim 1, **characterized in that** the digital encoded signal is asserted by another control module connected to the vehicular digital bus and an indicator-light switch when the indicator-light switch is enabled or when the indicator light is enabled to twinkle.

4. The control module according to claim 1, **characterized in that** the monitor device is a rearview mirror or a camera.

5. A monitor device control module for use with a vehicular control system, the vehicular control system comprising a plurality of control modules which controls various electric assemblies, respectively, and being in communication with each other via a vehicular digital bus, the monitor device control module being in communication with the vehicular digital bus, reading and decoding a first digital encoded signal which is asserted by one of the control modules of the vehicular control system, transmitted on the vehicular digital bus and corresponds to a turning operation of the vehicle, and asserting a second signal to adjust a view angle of a monitor device.

6. The monitor device control module according to claim 5, **characterized in that** the vehicular digital bus is a controller area network (CAN) bus or a vehicle area network (VAN) bus.

7. The monitor device control module according to claim 5, **characterized in that** the first digital encoded signal is asserted by another control module of the vehicular control system when the indicator-light switch is enabled or when the indicator light is enabled to twinkle.

8. The monitor device control module according to claim 5, **characterized in that** the monitor device is connected to a selected one of the control modules of the vehicular control system, and the selected control module reads and decodes the second digital encoded signal transmitted on the vehicular digital bus, and has the monitor device moved according to the decoded information.

9. The monitor device control module according to claim 5, **characterized in that** the monitor device is a rearview mirror or a CCD camera.

10. The monitor device control module according to claim 5, **characterized in that** the second signal is a digital encoded signal transmitted via the vehicular digital bus to one of the control modules to adjust the view angle of the monitor device.

11. A vehicular control system, comprising:
a vehicular digital bus;
a first control module in communication with the vehicular digital bus and an indicator light, and enabling the indicator light in response to a first vehicular digital signal asserted in response to an enabling operation of an indicator-light switch; and
a second control module in communication with the vehicular digital bus, reading and decoding the first digital encoded signal, and adjusting a view angle of a monitor device according to the decoded information.

12. The vehicular control system according to claim 11, **characterized in that** the second control module is connected to the monitor device to adjust the view angle of the monitor device in response to the first digital encoded signal.

13. The vehicular control system according to claim 11, **characterized in that** the monitor device is connected to the first control module, the second control module asserts a second digital encoded signal after reading and decoding the first digital encoded signal, and the first control module adjusts the view angle of the monitor device in response to the second digital encoded signal.

14. The vehicular control system according to claim 11, **characterized in that** the monitor device is connected to a third control module, the second control module asserts a second digital encoded signal after reading and decoding the first digital encoded signal, and the third control module adjusts the view angle of the monitor device in response to the second digital encoded signal.

15. The vehicular control system according to claim 11, **characterized in that** the indicator-light switch is connected to the first control module, and the first digital encoded signal is asserted by the first control module.

16. The vehicular control system according to claim 11, **characterized in that** the vehicular control system further comprises a third control module connected thereto the indicator-light switch, and asserting the first digital encoded signal when the indicator-light switch is enabled.
